# EUROPEAN PATENT SPECIFICATION

(11) **EP 4 059 749 B1**
(45) Date of publication and mention of the grant of the patent: **03.01.2024**
(21) Application number: 22162821.7
(22) Date of filing: 17.03.2022
(51) Int. Cl.: B60J 1/00, B60J 1/02, B60R 13/04

(54) **A MOTOR VEHICLE**
KRAFTFAHRZEUG
VÉHICULE À MOTEUR.

(30) Priority: 18.03.2021 NL 2027768
(43) Date of publication of application: 21.09.2022
(73) Proprietor: DAF Trucks N.V., 5643 TW Eindhoven (NL)
(72) Inventor: KLEES, Frans, 5643 TW Eindhoven (NL)
(74) Representative: V.O.

(56) References cited:
- EP-B1- 1 152 940
- DE-A1- 3 935 611
- DE-B1- 2 659 538
- FR-A1- 2 947 498
- JP-A- S6 099 716

## Description

The invention relates to a motor vehicle, in particular a heavy goods vehicle, comprising a driver cabin having a driver side and a co-driver side, the driver cabin comprising:
- a driver side A-pillar, a co-driver side A-pillar, a driver side B-pillar and a co-driver side B-pillar;
- a front windscreen having a central windscreen section, curved corners and a straight windscreen driver side portion and a straight windscreen co-driver side portion;
- a driver side door hingeably mounted to the driver side of the driver cabin and extending between the driver side A-pillar and the driver side B-pillar, the drive side door having a leading edge facing the driver side A-pillar and a trailing edge facing the driver side B-pillar, and a co-driver side door hingeably mounted to the co-driver side of the driver cabin and extending between the co-driver side A-pillar and the co-driver side B-pillar, the co-drive side door having a leading edge facing the co-driver side A-pillar and a trailing edge facing the co-driver side B-pillar;
- the front windscreen extending at an outside of the driver side A-pillar and at an outside of the co-driver side A-pillar, the central windscreen section covering an aperture between the driver side A-pillar and the co-driver side A-pillar, the straight windscreen driver side portion having a rear edge facing and spaced from the leading edge of the driver side door, the straight windscreen co-driver side portion having a rear edge facing the leading edge of the co-driver side door, a driver side gap being present between the rear edge of the straight windscreen driver side portion and the leading edge of the driver side door, and a co-driver side gap being present between the rear edge of the straight windscreen co-driver side portion and the leading edge of the co-driver side door.

Such a motor vehicle is for example known from EP1152940B1. In this known motor vehicle the A-pillar contains a third order mathematical ellipse when viewed from the top of the motor vehicle which third order ellipse at the A-pillar may be blended with the front windscreen for letting the airflow on the front windscreen to change flow direction from an outward flow direction to a flow direction parallel to the side door in order to improve aerodynamic and fuel consumption efficiency of the motor vehicle. However, it has appeared that dimensions of the components of the driver cabin such as the front windscreen and the A-pillars will vary due to dimensional tolerances and thus that the aperture between the A-pillars will also vary due to e.g. manufacturing tolerances. Furthermore, due to the required gaps in order to properly open the side doors and tolerances as a result of the manufacturing and assembly process of the various door components such as hinges additional geometrical imperfections are introduced. Due to this so called tolerance stack-up of the driver cabin assembly unwanted gaps between front windscreen and the side doors and surface discontinuations from the front windscreen to the side doors can hardly be avoided, leading to separation of the air-flow from the side doors thus resulting in a higher air-drag. Due to manufacturing and assembly process tolerances it is very difficult to design motor vehicle body parts that provide precise and uniform gaps and that provide flushness between a front windscreen side portion and a side door.

It is thus an object of the invention to provide a motor vehicle with a driver cabin in which gaps between front windscreen and side doors can be covered and flushness between the front windscreen side portions and the side doors can be obtained in a relatively easy manufacturing and assembly process at an acceptable price level.

According to the invention this object is at least partly achieved by providing a motor vehicle, in particular a heavy goods vehicle, comprising a driver cabin having a driver side and a co-driver side, the driver cabin comprising:
- a driver side A-pillar, a co-driver side A-pillar, a driver side B-pillar and a co-driver side B-pillar;
- a front windscreen having a central windscreen section, curved corners and a straight windscreen driver side portion and a straight windscreen co-driver side portion;
- a driver side door hingeably mounted to the driver side of the driver cabin and extending between the driver side A-pillar and the driver side B-pillar, the drive side door having a leading edge facing the driver side A-pillar and a trailing edge facing the driver side B-pillar, and a co-driver side door hingeably mounted to the co-driver side of the driver cabin and extending between the co-driver side A-pillar and the co-driver side B-pillar, the co-drive side door having a leading edge facing the co-driver side A-pillar and a trailing edge facing the co-driver side B-pillar;
- the front windscreen extending at an outside of the driver side A-pillar and at an outside of the co-driver side A-pillar, the central windscreen section covering an aperture between the driver side A-pillar and the co-driver side A-pillar, the straight windscreen driver side portion having a rear edge facing and spaced from the leading edge of the driver side door, the straight windscreen co-driver side portion having a rear edge facing the leading edge of the co-driver side door, a driver side gap being present between the rear edge of the straight windscreen driver side portion and the leading edge of the driver side door, and a co-driver side gap being present between the rear edge of the straight windscreen co-driver side portion and the leading edge of the co-driver side door;

characterized in that the front windscreen is glued in an overstressed mounted state to the driver side A-pillar and the co-driver side A-pillar, the overstressed mounted state being obtained by using a front windscreen of which an outer width at a specific height prior to mounting is smaller than a distance between a most forward inner edge of the driver side A-pillar and a most forward inner edge of the co-driver side A-pillar at the same height, by bending the front windscreen open and placing it over and gluing it to the driver side A-pillar and co-driver side A-pillar,
the rear edge of the straight windscreen driver side portion being positioned on the outside of the driver side A-pillar between the most forward inner edge of the driver side A-pillar and an outer edge of the driver side A-pillar, and the rear edge of the straight windscreen co-driver side portion being positioned on the outside of the co-driver side A-pillar between the most forward inner edge of the co-driver side A-pillar and an outer edge of the co-driver side A-pillar; and
in that the motor vehicle comprises a driver side A-pillar trim arranged for covering the driver side gap and for providing flushness between the straight windscreen driver side portion and the driver side door and a co-driver side A-pillar trim arranged for covering the co-driver side gap and for providing flushness between the straight windscreen co-driver side portion and the co-driver side door. By using such a front windscreen which prior to use is designed with a nominally 'too small' width and by bending the front windscreen slightly open and placing it over and on the A-pillars, a so called overstressed or shrink fit condition of the front windscreen on the A-pillars is obtained. This overstressed mounting leads to a good fit of the front windscreen to the A-pillars, reduces the negative influence of the tolerances of the glazing of the front windscreen and possible geometrical imperfections are compensated by the flexibility of the front windscreen. The A-pillar trims then cover the driver and co-driver side gaps and provide flushness between the straight windscreen side portions and the side doors. The A-pillar trims are in particular beneficial in case the side doors are aligned and positioned with regard to the respective B-pillars, which could lead to potentially larger driver and co-driver side gaps at the A-pillar side.

In an embodiment of a motor vehicle according to the invention prior to mounting the outer width of the front windscreen at a specific height is up to 10 mm smaller than a distance between most forward inner edge of the driver side A-pillar and the most forward inner edge of the co-driver side A-pillar at the same height.

In a further embodiment of a motor vehicle according to the invention the length of the straight windscreen driver side portion and the length of the straight windscreen co-driver side portion as seen in a usual driving direction of the motor vehicle is larger than 100 mm. By such a length, also called overlength, aerodynamic drag is reduced since a flow direction of the airflow parallel to the side door will be maintained.

In still further embodiment of a motor vehicle according to the invention each A-pillar trim comprises an A-pillar carrier attached to the respective A-pillar and a separate A-pillar cover attached to the A-pillar carrier. By using such a two part A-pillar trim driver and co-driver side gaps of different dimensions can be covered in an easy manner while flushness between a front windscreen side portion and a respective side door can be obtained.

In a further embodiment of a motor vehicle according to the invention the A-pillar carrier then comprises at least four slot holes oriented in a usual driving direction of the motor vehicle and at least one stop plate hingeably connected to the A-pillar carrier, a trailing side of the stop plate being in line with the leading edge of the respective door in a closed position. By using such a A-pillar carrier the A-pillar carrier can be correctly positioned with regard to the respective side door after which the A-pillar carrier can be attached to the respective A-pillar. In particular it is preferable that the A-pillar carrier has two stop plates hingeably connected to the A-pillar carrier, the trailing side of each of the stop plates being in line with the leading edge of the respective door in the closed position, so that a proper alignment of the A-pillar carrier to the respective side door can be attained. Preferably, the vertical orientation of the A-pillar carrier with regard to the respective A-pillar is determined by the second slot hole seen from the top.

In a further embodiment of a motor vehicle according to the invention the A-pillar cover and the A-pillar carrier are snap fitted together by means of first snap fit means on the A-pillar cover and second snap fit means on the A-pillar carrier cooperating with the first snap fit means. In this manner the A-pillar cover can be attached to the A-pillar carrier once this latter is correctly positioned with regard to the respective side door and attached to the respective A-pillar.

Preferably, the A-pillar cover comprises of leading sealing and a trailing sealing, the trailing sealing engaging an inner side of the leading edge of the respective door, the leading sealing engaging an outer side of the rear edge of the respective straight windscreen side portion. In this manner gaps between front windscreen and side doors can be covered and flushness between the front windscreen side portions and the side doors can be obtained in a relatively easy manner.

In an embodiment of a motor vehicle according to the invention in which a top of the leading sealing and a top of the trailing sealing are connected to each other by a top sealing, wherein the top sealing engages a roof of the driver cabin possible gaps between a top of the A-pillar trim and the roof of the driver cabin can be covered thereby reducing aerodynamic. Preferably, the A-pillar cover comprises an A-pillar main body and the leading sealing and the trailing sealing, wherein the A-pillar main body and the sealings are formed by a 2K-process.

In a further embodiment of a motor vehicle according to the invention the A-pillar carrier comprises ridges extending in vertical direction, the ridges being provided on a side of the A-pillar carrier directed towards the respective door, the ridges engaging the trailing sealing of the A-pillar cover. In this manner rotation of the A-pillar cover as a result of opening and closing movements of the respective side door, which rotation could result in wear and an unwanted open gap between the leading sealing and the front windscreen, can be avoided.

The invention will be further explained with reference to the Figures, in which a non-limiting exemplary embodiment of according to the invention is shown:
Fig. 1 schematically shows a motor vehicle comprising a driver cabin in accordance with an embodiment of the invention;
Fig. 2 schematically shows in cross section of the front windscreen, a driver side A-pillar and a co-driver side A-pillar of the motor vehicle of Figure 1 in a situation prior to mounting the front windscreen to the A-pillars;
Fig. 3 schematically shows in cross section a step of mounting the front windscreen to the A-pillars of Figure 2 in which step the front windscreen is slightly bent open;
Fig. 4 schematically shows in cross section the situation in which the front windscreen of Figure 3 is mounted to the A-pillars;
Fig. 5 schematically shows in cross section a detail of the front windscreen mounted to the driver side A-pillar and the driver side door in closed position;
Figs. 6 and 7 schematically show in perspective an embodiment of a two part A-pillar trim of the motor vehicle according to the invention, in which in Figure 6 the A-pillar cover of the A-pillar trim is shown and in Figure 7 the A-pillar carrier of the A-pillar trim is shown;
Fig. 8 schematically shows in side view the A-pillar carrier of Figure 7;
Fig. 9 schematically shows in side view a detail of the A-pillar carrier as shown in Figure 8;
Fig. 10 schematically shows in perspective a detail of the A-pillar carrier as shown in Figure 9;
Fig. 11 schematically shows in perspective shows the A-pillar carrier of Figures 7 and 8 mounted to the driver side A-pillar;
Fig. 12 schematically shows in cross section the A-pillar cover mounted to the A-pillar carrier of Figure 11;
Fig. 13 schematically shows a cross section of the A-pillar cover mounted to the A-pillar carrier at the position indicated by the line XIII-XIII of Figure 11; and
Fig. 14 schematically shows cross section of the A-pillar cover mounted to the A-pillar carrier at the position indicated by the line XIV-XIV of Figure 11.

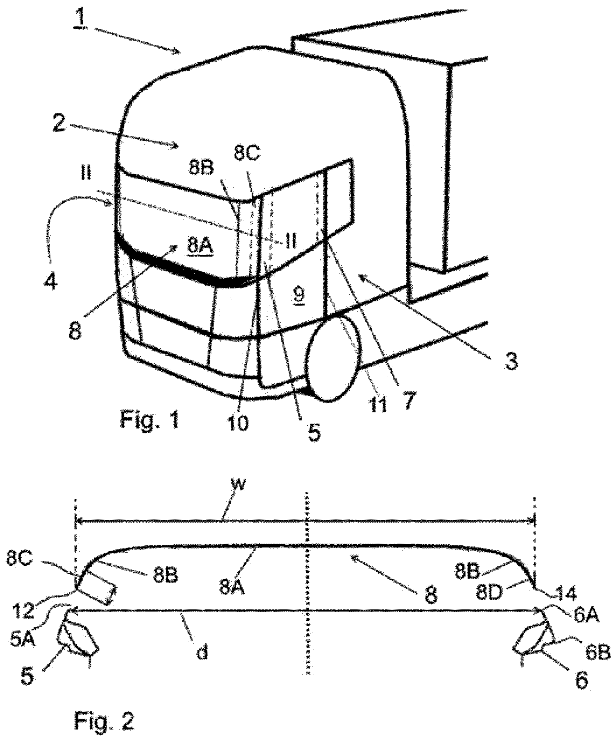

In Fig. 1 a motor vehicle according to the invention is schematically shown in perspective. In the shown embodiment the motor vehicle is a heavy goods vehicle 1 comprising a driver cabin 2 having a driver side 3 and a co-driver side 4 positioned at the opposite side of the driver side 3. As is common in the field of motor vehicles, the driver cabin 2 comprises a driver side A-pillar 5, a co-driver side A-pillar 6 (see e.g. Fig. 2), a driver side B-pillar 7 and a co-driver side B-pillar (not visible in Figure 1).

A front windscreen 8 extends at an outside of the driver side A-pillar 5 and at an outside of the co-driver side A-pillar 6. The front windscreen 8 has a central windscreen section 8A, curved corners 8B and a straight windscreen driver side portion 8C and a straight windscreen co-driver side portion 8D as indicated in Figure 2.

The driver cabin 2 has a driver side door 9 hingeably mounted to the driver side of the driver cabin 2. The driver side door 9 extends between the driver side A-pillar 5 and the driver side B-pillar 7. The drive side door 9 has a leading edge 10 facing the driver side A-pillar 5 and a trailing edge 11 facing the driver side B-pillar 7. Analogously the co-driver side door is hingeably mounted to the co-driver side4 of the driver cabin 2 and extends between the co-driver side A-pillar 6 and the co-driver side B-pillar. As the driver side door 9 the co-drive side door has a leading edge facing the co-driver side A-pillar 6 and a trailing edge facing the co-driver side B-pillar.

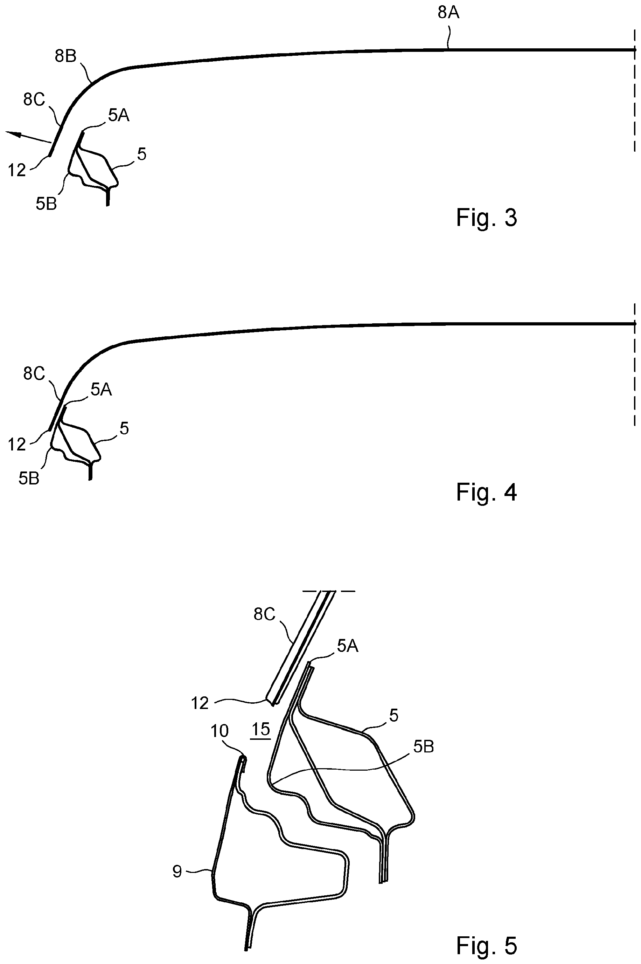

As indicated in Figure 1 the central windscreen section 8A covers an aperture between the driver side A-pillar 5 and the co-driver side A-pillar 6. The straight windscreen driver side portion 8C has a rear edge 12 facing and spaced from the leading edge 10 of the driver side door 9 (see Fig. 5). Analogously, the straight windscreen co-driver side portion 8D has a rear edge 14 (see Fig. 2) facing the leading edge of the co-driver side door.

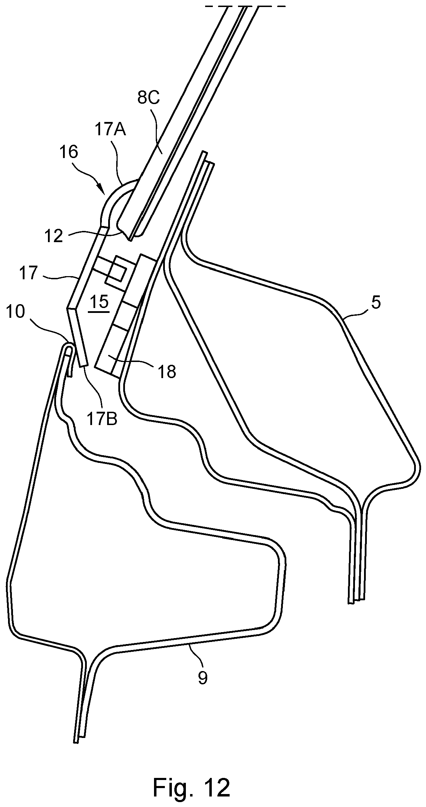

A driver side gap 15 (see Fig. 5 and 12) is present between the rear edge 12 of the straight windscreen driver side portion 8C and the leading edge 10 of the driver side door 9. The same applies to the co-driver side 4 of the driver cabin 2, where a co-driver side gap is present between the rear edge 14 of the straight windscreen co-driver side portion 8D and the leading edge of the co-driver side door.

According to the invention the front windscreen 8 is glued in an overstressed mounted state to the driver side A-pillar 5 and the co-driver side A-pillar 6 as will be explained with reference to Figures 2 to 4. As indicated in Figure 2 according to the invention a front windscreen 8 is used of which an outer width w at a specific height prior to mounting is smaller than a distance d between a most forward inner edge 5A of the driver side A-pillar 5 and a most forward inner edge 6A of the co-driver side A-pillar 6 at the same specific height. In particular, prior to mounting the outer width w of the front windscreen 8 at a specific height is up to 10 mm smaller than a distance d between most forward inner edge 5A of the driver side A-pillar 5 and the most forward inner edge 6A of the co-driver side A-pillar 6 at the same height.

The front windscreen 8 is mounted onto the A-pillars 5, 6 by bending the front windscreen 8 open as indicated by the arrow in Figure 2. In this manner the width of the front windscreen 8 is enlarged such that it becomes larger than the distance d. Then the front windscreen 8 is placed over the driver side A-pillar 5 and co-driver side A-pillar 6, on which previously glue has been applied, and the front windscreen is released such that it is in contact with the A-pillars, as indicated in Figure 4 for the driver side A-pillar 5. In this manner the front windscreen 8 is mounted in an overstressed state to the A-pillars 5, 6. The described mounting of the front windscreen 8 can for example be performed by mounting robots.

As indicated in Figures 4 and 5 mounting the front windscreen 8 is performed such that the rear edge 12 of the straight windscreen driver side portion 8C is positioned on the outside of the driver side A-pillar 5 between the most forward inner edge 5A of the driver side A-pillar 5 and an outer edge 5B of the driver side A-pillar 5. The same applies to the co-driver side 4 where the rear edge 14 of the straight windscreen co-driver side portion 8D is positioned on the outside of the co-driver side A-pillar 6 between the most forward inner edge 6A of the co-driver side A-pillar 6 and an outer edge 6B of the co-driver side A-pillar 6.

In the embodiment of the heavy goods vehicle as indicated in the Figures the length of the straight windscreen driver side portion 8C and the length of the straight windscreen co-driver side portion 8D as seen in a usual driving direction of the heavy goods vehicle 1 is larger than 100 mm as a result of which aerodynamic drag is reduced.

In assembling the driver side door 9 to the driver cabin 2 the driver side door 9 is positioned relative to the driver side B-pillar 7 in order to obtain a defined gap and flushness between the driver side door and the B-pillar 7 in order to obtain good aerodynamic properties at the interface between the driver side door 9 and the driver side B-pillar 7. Due to e.g. manufacturing tolerances positioning the driver side door 9 with regard to the driver side B-pillar 7 can result in gaps 15 at the driver side A-pillar 5 which varies from one heavy goods vehicle 1 to the other. According to the invention gaps 15 of varying dimensions can be closed and flushness between the straight windscreen driver side portion 8C and the driver side door 9 can be realized by providing a driver side A-pillar trim 16 arranged for covering the driver side gap 15 and for providing flushness between the straight windscreen driver side portion 8C and the driver side door 9. At the co-driver side 4 a similar co-driver side A-pillar trim is arranged for covering the co-driver side gap and for providing flushness between the straight windscreen co-driver side portion and the co-driver side door. The construction of the A-pillar trim will be discussed below with regard to the driver side A-pillar trim 16, however it will be understood that the description also holds for the co-driver side A-pillar trim.

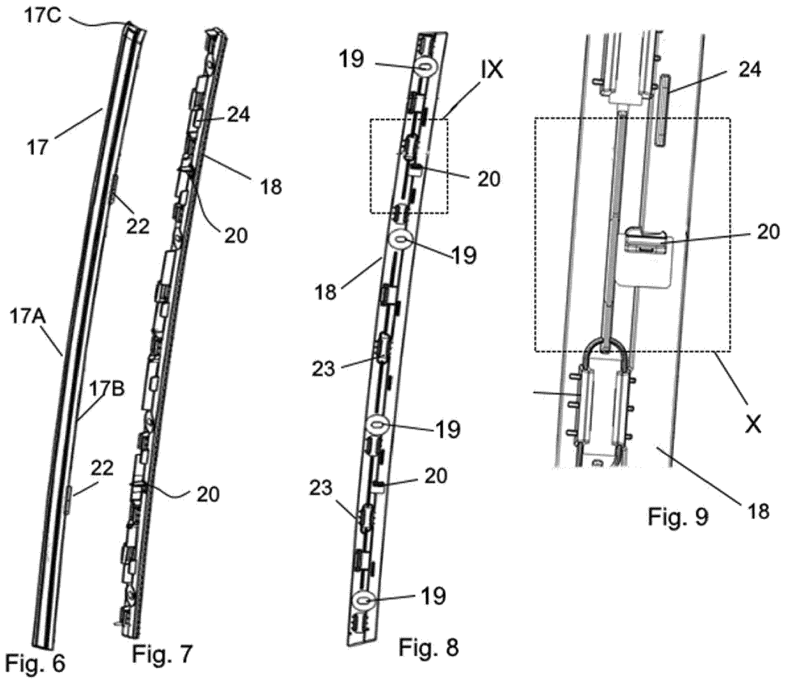

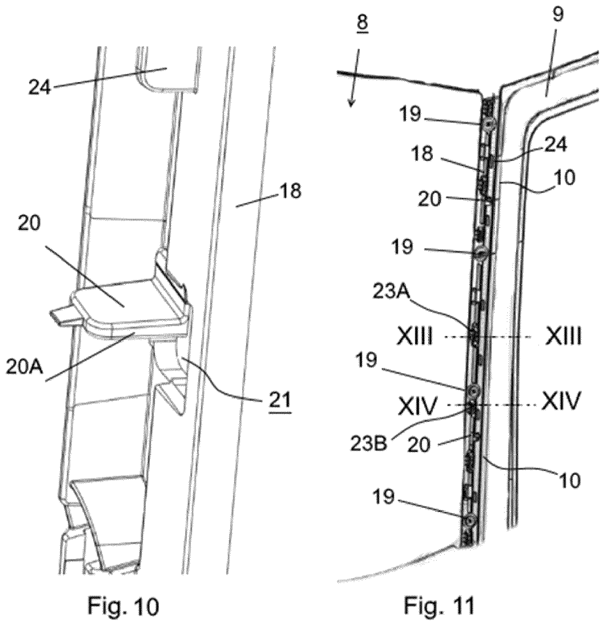

According to the invention the A-pillar trim 16 comprises an A-pillar carrier 18 (see e.g. Figure 7) to be attached to the A-pillar 5 and a separate A-pillar cover 17 (see e.g. Figure 6) to be attached to the A-pillar carrier 18. As indicated in Figures 8 and 11 the A-pillar carrier 18 comprises at least four slot holes 19 oriented in a usual driving direction of the heavy goods vehicle 1. The A-pillar carrier 18 is provided with at least one stop plate 20, preferably two stop plates 20 are provided, which stop plates 20 are hingeably connected to the A-pillar carrier 18. This can for example be realized by injection moulding the A-pillar carrier 18, in which moulding process the stop plates are arranged to be hingeable along line-hinges.

As indicated in Figure 11 the A-pillar carrier 18 is positioned on the driver side A-pillar 5 and by the virtue of the slot holes 19 is slid towards the driver side door 9 until a trailing side 20A (see Figure 10) of the stop plate 20 is in contact with the leading edge 10 of the driver side door 9 in closed position. In particular the vertical orientation of the A-pillar carrier 18 with regard to the driver side A-pillar 5 is determined by the second slot hole 19 seen from the top, although in other embodiments the top most slot hole 19 can be used. In this manner the A-pillar carrier 18 is correctly positioned with regard to the driver side door 9, and is attached to the driver side A-pillar 18 by means of e.g. screws or bolts passing through the slotted holes 19. The stop plates 20 are then pushed back into openings 21 in the A-pillar carrier 18 so that they are not protruding.

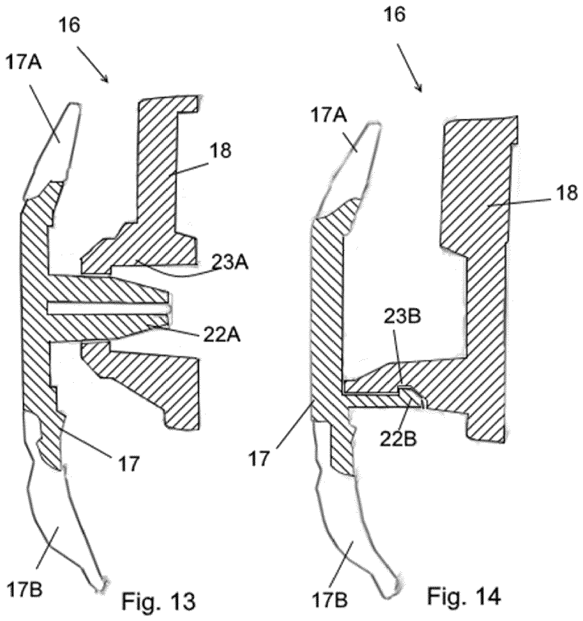

After the A-pillar carrier 18 is attached to the driver side A-pillar 5 the A-pillar cover 17 and the A-pillar carrier 18 are snap fitted together by means of first snap fit means 22 on the A-pillar cover 17 and second snap fit means 23 on the A-pillar carrier 18, which snap fit means 22, 23 cooperate with each other. Exemplary embodiments of such snap fit means 22A, 22B and 23A, 23B are indicated in Figures 13 and 14, and different kinds of snap fit means 22A, 22B; 23A, 23B can be incorporated into an A-pillar trim 18 at different heights as indicated in Figure 11. By snap fitting the A-pillar cover 17 to the A-pillar carrier 18 the gap 15 between the rear edge 12 of the straight windscreen driver side portion 8C and the leading edge 10 of the driver side door 9 is closed as indicated in Figure 12.

According to the invention flushness between the straight windscreen driver side portion 8C and the driver side door 9 is obtained in that the A-pillar cover 17 comprises of leading sealing 17A and a trailing sealing 17B as shown in Figures 12 to 14. The trailing sealing 17B engages an inner side of the leading edge 10 of the driver side door 9, while the leading sealing 17A engages an outer side of the rear edge 12 of the driver side straight windscreen side portion 8C. AS indicated in Figure 6 a top of the leading sealing 17A and a top of the trailing sealing 17B are connected to each other by a top sealing 17C, which top sealing 17C in assembled states of the driver cabin 2 engages a roof of the driver cabin 2. Preferably, the A-pillar cover 17 comprises an A-pillar main body 17D and the sealings 17A-17C, wherein the A-pillar main body 17D and the sealings 17A-C are formed by a 2K-process.

Due to the contact condition of the trailing sealing 17B the A-pillar cover 17 can be prone to rotations along the vertical axis as result of opening and closing movements of the driver side door 9, which could result in wear and an unwanted open gap condition between the leading sealing 17A and the front windscreen. By providing the A-pillar carrier 18 with ridges 24 which extend in vertical direction, which ridges 24 are provided on a side of the A-pillar carrier 18 directed towards the driver side door 9 as shown in Figures 7, 9 and 11, the ridges 24 engage the trailing sealing 17B of the A-pillar cover 17. In this manner rotation of the A-pillar cover 17 as a result of opening and closing movements of the driver side door 9 can be avoided.

## Claims

1. A motor vehicle, in particular a heavy goods vehicle, comprising a driver cabin (2) having a driver side (3) and a co-driver side (4), the driver cabin comprising:
- a driver side A-pillar (5), a co-driver side A-pillar (6), a driver side B-pillar (7) and a co-driver side B-pillar;
- a front windscreen (8) having a central windscreen section (8A), curved corners (8B) and a straight windscreen driver side portion (8C) and a straight windscreen co-driver side portion (8D);
- a driver side (9) hingeably mounted to the driver side of the driver cabin and extending between the driver side A-pillar and the driver side B-pillar, the drive side door having a leading edge (10) facing the driver side A-pillar and a trailing edge (11) facing the driver side B-pillar, and a co-driver side door hingeably mounted to the co-driver side of the driver cabin and extending between the co-driver side A-pillar and the co-driver side B-pillar, the co-drive side door having a leading edge facing the co-driver side A-pillar and a trailing edge facing the co-driver side B-pillar;
- the front windscreen extending at an outside of the driver side A-pillar and at an outside of the co-driver side A-pillar, the central windscreen section covering an aperture between the driver side A-pillar and the co-driver side A-pillar, the straight windscreen driver side portion having a rear edge (12) facing and spaced from the leading edge (10) of the driver side door, the straight windscreen co-driver side portion having a rear edge (14) facing the leading edge of the co-driver side door, a driver side gap (15) being present between the rear edge of the straight windscreen driver side portion and the leading edge of the driver side door, and a co-driver side gap being present between the rear edge of the straight windscreen co-driver side portion and the leading edge of the co-driver side door;
**characterized in that** the front windscreen is glued in an overstressed mounted state to the driver side A-pillar and the co-driver side A-pillar, the overstressed mounted state being obtained by using a front windscreen of which an outer width (w) at a specific height prior to mounting is smaller than a distance (d) between a most forward inner edge (5A) of the driver side A-pillar and a most forward inner edge (6A) of the co-driver side A-pillar at the same height, by bending the front windscreen open and placing it over and gluing it to the driver side A-pillar and co-driver side A-pillar,
the rear edge of the straight windscreen driver side portion being positioned on the outside of the driver side A-pillar between the most forward inner edge (5A) of the driver side A-pillar and an outer edge (5B) of the driver side A-pillar, and the rear edge of the straight windscreen co-driver side portion being positioned on the outside of the co-driver side A-pillar between the most forward inner edge (6A) of the co-driver side A-pillar and an outer edge (6B) of the co-driver side A-pillar; and
**in that** the motor vehicle comprises a driver side A-pillar trim (16) arranged for covering the driver side gap (15) and for providing flushness between the straight windscreen driver side portion and the driver side door and a co-driver side A-pillar trim arranged for covering the co-driver side gap and for providing flushness between the straight windscreen co-driver side portion and the co-driver side door.

2. A motor vehicle according to claim 1, wherein prior to mounting the outer width (w) of the front windscreen at a specific height is up to 10 mm smaller than a distance between most forward inner edge (5A) of the driver side A-pillar and the most forward inner edge (6A) of the co-driver side A-pillar at the same height.

3. A motor vehicle according to claim 1 or 2, wherein the length of the straight windscreen driver side portion (8C) and the length of the straight windscreen co-driver side portion (8D) as seen in a usual driving direction of the motor vehicle is larger than 100 mm.

4. A motor vehicle according to claim 1, 2 or 3, wherein each A-pillar trim comprises an A-pillar carrier (18) attached to the respective A-pillar and a separate A-pillar cover (17) attached to the A-pillar carrier.

5. A motor vehicle according to claim 4, wherein the A-pillar carrier comprises at least four slot holes (19) oriented in a usual driving direction of the motor vehicle and at least one stop plate (20) hingeably connected to the A-pillar carrier, a trailing side (20A) of the stop plate being in line with the leading edge (10) of the respective door in a closed position.

6. A motor vehicle according to claim 5, wherein the A-pillar carrier has two stop plates hingeably connected to the A-pillar carrier, the trailing side of each of the stop plates being in line with the leading edge of the respective door in the closed position.

7. A motor vehicle according to claim 5 or 6, wherein the vertical orientation of the A-pillar carrier with regard to the respective A-pillar is determined by the second slot hole seen from the top.

8. A motor vehicle according to any one of the claims 4 to 7, wherein the A-pillar cover and the A-pillar carrier are snap fitted together by means of first snap fit means (22) on the A-pillar cover (17) and second snap fit means (23) on the A-pillar carrier (18) cooperating with the first snap fit means.

9. A motor vehicle according to any one of the claims 4 to 8, wherein the A-pillar cover comprises of leading sealing (17A) and a trailing sealing (17B), the trailing sealing engaging an inner side of the leading edge of the respective door, the leading sealing engaging an outer side of the rear edge of the respective straight windscreen side portion.

10. A motor vehicle according to claim 9, wherein a top of the leading sealing and a top of the trailing sealing are connected to each other by a top sealing (17C), the top sealing engaging a roof of the driver cabin.

11. A motor vehicle according to claim 9 or 10, wherein the A-pillar cover (17) comprises an A-pillar main body (17D) and the leading sealing (17A) and the trailing sealing 17B), the A-pillar main body and the sealings formed by a 2K-process.

12. A motor vehicle according to any one of the claims 4 to 11, wherein the A-pillar carrier comprises ridges (24) extending in vertical direction, the ridges being provided on a side of the A-pillar carrier directed towards the respective door, the ridges engaging the trailing sealing of the A-pillar cover.

## Patentansprüche

1. Kraftfahrzeug, insbesondere Lastkraftwagen, aufweisend eine Fahrerkabine (2) mit einer Fahrerseite (3) und einer Beifahrerseite (4), wobei die Fahrerkabine aufweist:
- eine fahrerseitige A-Säule (5), eine beifahrerseitige A-Säule (6), eine fahrerseitige B-Säule (7) und eine beifahrerseitige B-Säule;
- eine vordere Windschutzscheibe (8) mit einem mittleren Windschutzscheibenbereich (8A), gekrümmten Ecken (8B) und einem geraden fahrerseitigen Windschutzscheibenbereich (8C) und einem geraden beifahrerseitigen Windschutzscheibenbereich (8D);
- eine Fahrerseite (9), die schwenkbar an die Fahrerseite der Fahrerkabine montiert ist und sich zwischen der fahrerseitigen A-Säule und der fahrerseitigen B-Säule erstreckt, wobei die fahrerseitige Tür eine der fahrerseitigen A-Säule zugewandte Vorderkante (10) und eine der fahrerseitigen B-Säule zugewandte Hinterkante (11) aufweist, und eine beifahrerseitige Tür, die schwenkbar an die Beifahrerseite der Fahrerkabine montiert ist und sich zwischen der beifahrerseitigen A-Säule und der beifahrerseitigen B-Säule erstreckt, wobei die beifahrerseitige Tür eine der beifahrerseitigen A-Säule zugewandte Vorderkante und eine der beifahrerseitigen B-Säule zugewandte Hinterkante aufweist;
- wobei sich die vordere Windschutzscheibe an einer Außenseite der fahrerseitigen A-Säule und an einer Außenseite der beifahrerseitigen A-Säule erstreckt, der mittlere Windschutzscheibenbereich eine Öffnung zwischen der fahrerseitigen A-Säule und der beifahrerseitigen A-Säule abdeckt, der gerade fahrerseitige Windschutzscheibenbereich eine Hinterkante (12) aufweist, die der Vorderkante (10) der fahrerseitigen Tür zugewandt und von dieser beabstandet ist, der gerade beifahrerseitige Windschutzscheibenbereich eine Hinterkante (14) aufweist, die der Vorderkante der beifahrerseitigen Tür zugewandt ist, zwischen der Hinterkante des geraden fahrerseitigen Windschutzscheibenbereichs und der Vorderkante der fahrerseitigen Tür eine fahrerseitige Lücke (15) besteht und zwischen der Hinterkante des geraden beifahrerseitigen Windschutzscheibenbereichs und der Vorderkante der beifahrerseitigen Tür eine beifahrerseitige Lücke besteht;
**dadurch gekennzeichnet, dass** die vordere Windschutzscheibe in einem überspannten montierten Zustand an die fahrerseitige A-Säule und die beifahrerseitige A-Säule geklebt wird, wobei der überspannte montierte Zustand erzielt wird durch die Verwendung einer vorderen Windschutzscheibe, deren äußere Breite (w) in einer bestimmten Höhe vor dem Montieren kleiner ist als ein Abstand (d) zwischen einer vordersten inneren Kante (5A) der fahrerseitigen A-Säule und einer vordersten inneren Kante (6A) der beifahrerseitigen A-Säule in der gleichen Höhe, durch Aufbiegen der vorderen Windschutzscheibe und Platzieren derselben über und Festkleben an der fahrerseitigen A-Säule und der beifahrerseitigen A-Säule, wobei die Hinterkante des geraden fahrerseitigen Windschutzscheibenabschnitts an der Außenseite der fahrerseitigen A-Säule zwischen der vordersten inneren Kante (5A) der fahrerseitigen A-Säule und einer äußeren Kante (5B) der fahrerseitigen A-Säule positioniert wird, und die Hinterkante des geraden beifahrerseitigen Windschutzscheibenbereichs an der Außenseite der beifahrerseitigen A-Säule zwischen der vordersten inneren Kante (6A) der beifahrerseitigen A-Säule und einer äußeren Kante (6B) der beifahrerseitigen A-Säule positioniert wird; und
dass das Kraftfahrzeug eine Zierleiste (16) der fahrerseitigen A-Säule, die dazu eingerichtet ist, die fahrerseitige Lücke (15) zu überdecken und Bündigkeit zwischen dem geraden fahrerseitigen Windschutzscheibenbereich und der fahrerseitigen Tür bereitzustellen und eine Zierleiste der beifahrerseitigen A-Säule, die dazu eingerichtet ist, die beifahrerseitige Lücke zu überdecken und Bündigkeit zwischen dem geraden beifahrerseitigen Windschutzscheibenbereich und der beifahrerseitigen Tür bereitzustellen, aufweist.

2. Kraftfahrzeug nach Anspruch 1, wobei vor dem Montieren die äußere Breite (w) der vorderen Windschutzscheibe in einer bestimmten Höhe bis zu 10 mm kleiner ist als der Abstand zwischen der vordersten inneren Kante (5A) der fahrerseitigen A-Säule und der vordersten inneren Kante (6A) der beifahrerseitigen A-Säule in der gleichen Höhe.

3. Kraftfahrzeug nach Anspruch 1 oder 2, wobei die Länge des geraden fahrerseitigen Windschutzscheibenbereichs (8C) und die Länge des geraden beifahrerseitigen Windschutzscheibenbereichs (8D) in einer gewöhnlichen Fahrrichtung des Kraftfahrzeugs größer ist als 100 mm.

4. Kraftfahrzeug nach Anspruch 1, 2 oder 3, wobei jede Zierleiste der A-Säule einen A-Säulen-Träger (18) aufweist, der an der jeweiligen A-Säule angebracht ist und eine separate A-Säulen-Abdeckung (17), die an den A-Säulen-Träger angebracht ist.

5. Kraftfahrzeug nach Anspruch 4, wobei der A-Säulen-Träger mindestens vier Langlöcher (19), die in einer gewöhnlichen Fahrrichtung des Kraftfahrzeugs ausgerichtet sind und mindestens eine Anschlagplatte (20), die schwenkbar an den A-Säulen-Träger angebracht ist, aufweist, wobei eine Hinterseite (20A) der Anschlagplatte mit der Vorderkante (10) der jeweiligen Tür in geschlossener Position ausgerichtet ist.

6. Kraftfahrzeug nach Anspruch 5, wobei der A-Säulen-Träger zwei Anschlagplatten aufweist, die schwenkbar mit dem A-Säulen-Träger verbunden sind, wobei die Hinterseiten jeder Anschlagplatte mit der Vorderkante der jeweiligen Tür in geschlossener Position ausgerichtet sind.

7. Kraftfahrzeug nach Anspruch 5 oder 6, wobei die vertikale Ausrichtung des A-Säulen-Trägers in Bezug auf die jeweilige A-Säule durch das zweite Langloch von oben bestimmt wird.

8. Kraftfahrzeug nach einem der Ansprüche 4 bis 7, wobei die A-Säulen-Abdeckung und der A-Säulen-Träger mittels einen ersten Schnappverschluss (22) auf der A-Säulen-Abdeckung (17) und einen zweiten Schnappverschluss (23) auf dem A-Säulen-Träger (18), der mit dem ersten Schnappverschluss zusammenwirkt, schnappverbunden sind.

9. Kraftfahrzeug nach einem der Ansprüche 4 bis 8, wobei die A-Säulen-Abdeckung eine vordere Abdichtung (17A) und eine hintere Abdichtung (17B) aufweist, wobei die hintere Abdichtung mit einer Innenseite der vorderen Kante der jeweiligen Tür in Eingriff kommt, und die vordere Abdichtung mit einer Außenseite der Hinterkante des jeweiligen geraden Windschutzscheibenbereichs in Eingriff kommt.

10. Kraftfahrzeug nach Anspruch 9, wobei eine Oberseite der vorderen Abdichtung und eine Oberseite der hinteren Abdichtung durch eine obere Abdichtung (17C) miteinander verbunden sind, wobei die obere Abdichtung mit einem Dach der Fahrerkabine in Eingriff kommt.

11. Kraftfahrzeug nach Anspruch 9 oder 10, wobei die A-Säulen-Abdeckung (17) einen A-Säulen-Hauptkörper (17D) und die vordere Abdichtung (17A) und die hintere Abdichtung (17B) aufweist, wobei der A-Säulen-Hauptkörper und die Abdichtungen durch ein 2K-Verfahren gebildet werden.

12. Kraftfahrzeug nach einem der Ansprüche 4 bis 11, wobei der A-Säulen-Träger Stege (24) aufweist, die sich in vertikaler Richtung erstrecken, wobei die Stege auf einer Seite des A-Säulen-Trägers vorgesehen sind, die zur jeweiligen Tür ausgerichtet ist, wobei die Stege mit der hinteren Abdichtung der A-Säulen-Abdeckung in Eingriff kommen.

## Revendications

1. Véhicule à moteur, en particulier véhicule poids lourd, comprenant une cabine de conducteur (2) ayant un côté conducteur (3) et un côté passager (4), la cabine de conducteur comprenant :
- un montant A côté conducteur (5), un montant A côté passager (6), un montant B côté conducteur (7) et un montant B côté passager ;
- un pare-brise avant (8) ayant une section de pare-brise centrale (8A), des coins incurvés (8B) et une partie de pare-brise rectiligne côté conducteur (8C) et une partie de pare-brise rectiligne côté passager (8D) ;
- un côté conducteur (9) monté de manière articulée sur le côté conducteur de la cabine de conducteur et s'étendant entre le montant A côté conducteur et le montant B côté conducteur, la porte côté conducteur ayant un bord d'attaque (10) faisant face au montant A côté conducteur et un bord de fuite (11) faisant face au montant B côté conducteur, et une porte côté passager montée de manière articulée sur le côté passager de la cabine de conducteur et s'étendant entre le montant A côté passager et le montant B côté passager, la porte côté passager ayant un bord d'attaque faisant face au montant A côté passager et un bord de fuite faisant face au montant B côté passager ;
- le pare-brise avant s'étendant au niveau d'un extérieur du montant A côté conducteur et au niveau d'un extérieur du montant A côté passager, la section centrale de pare-brise couvrant une ouverture entre le montant A côté conducteur et le montant A côté passager, la partie de pare-brise rectiligne côté conducteur ayant un bord arrière (12) faisant face au bord d'attaque (10) de la porte côté conducteur, et espacé de celui-ci, la partie de pare-brise rectiligne côté passager ayant un bord arrière (14) faisant face au bord d'attaque de la porte côté passager, un espace côté conducteur (15) étant présent entre le bord arrière de la partie de pare-brise rectiligne côté conducteur et le bord d'attaque de la porte côté conducteur, et un espace côté passager étant présent entre le bord arrière de la partie de pare-brise rectiligne côté passager et le bord d'attaque de la porte côté passager ;
**caractérisé en ce que** le pare-brise avant est collé dans un état monté en surcharge sur le montant A côté conducteur et le montant A côté passager, l'état monté en surcharge étant obtenu en utilisant un pare-brise avant dont une largeur extérieure (w) à une hauteur spécifique avant le montage est inférieure à une distance (d) entre un bord intérieur le plus en avant (5A) du montant A côté conducteur et un bord intérieur le plus en avant (6A) du montant A côté passager à la même hauteur, en courbant le pare-brise avant dégagé et en le plaçant et en le collant sur le montant A côté conducteur et le montant A côté passager,
le bord arrière de la partie de pare-brise rectiligne côté conducteur étant positionné à l'extérieur du montant A côté conducteur entre le bord intérieur le plus en avant (5A) du montant A côté conducteur et un bord extérieur (5B) du montant A côté conducteur, et le bord arrière de la partie de pare-brise rectiligne côté passager étant positionné sur l'extérieur du montant A côté passager entre le bord intérieur le plus en avant (6A) du montant A côté passager et un bord extérieur (6B) du montant A côté passager ; et
**en ce que** le véhicule à moteur comprend une garniture de montant A côté conducteur (16) agencée pour couvrir l'espace côté conducteur (15) et pour permettre un affleurement entre la partie de pare-brise rectiligne côté conducteur et la porte côté conducteur et une garniture de montant A côté passager agencée pour couvrir l'espace côté passager et pour permettre un affleurement entre la partie de pare-brise rectiligne côté passager et la porte côté passager.

2. Véhicule à moteur selon la revendication 1, dans lequel, avant montage, la largeur extérieure (w) du pare-brise avant à une hauteur spécifique est jusqu'à 10 mm plus petite qu'une distance entre le bord intérieur le plus en avant (5A) du montant A côté conducteur et le bord intérieur le plus en avant (6A) du montant A côté passager à la même hauteur.

3. Véhicule à moteur selon la revendication 1 ou 2, dans lequel la longueur de la partie de pare-brise rectiligne côté conducteur (8C) et la longueur de la partie de pare-brise rectiligne côté passager (8D) telles qu'observées dans une direction de conduite habituelle du véhicule à moteur sont supérieures à 100 mm.

4. Véhicule à moteur selon la revendication 1, 2 ou 3, dans lequel chaque garniture de montant A comprend un support de montant A (18) fixé au montant A respectif et un couvercle de montant A séparé (17) fixé au support de montant A.

5. Véhicule à moteur selon la revendication 4, dans lequel le support de montant A comprend au moins quatre trous oblongs (19) orientés dans une direction de conduite habituelle du véhicule à moteur et au moins une plaque d'arrêt (20) reliée de manière articulée au support de montant A, un côté de fuite (20A) de la plaque d'arrêt étant aligné avec le bord d'attaque (10) de la porte respective dans une position fermée.

6. Véhicule à moteur selon la revendication 5, dans lequel le support de montant A comprend deux plaques d'arrêt reliées de manière articulée au support de montant A, le côté de fuite de chacune des plaques d'arrêt étant aligné avec le bord d'attaque de la porte respective dans la position fermée.

7. Véhicule à moteur selon la revendication 5 ou 6, dans lequel l'orientation verticale du support de montant A par rapport au montant A respectif est déterminée par le second trou oblong observé de dessus.

8. Véhicule à moteur selon l'une quelconque des revendications 4 à 7, dans lequel le couvercle de montant A et le support de montant A sont ajustés ensemble par encliquetage au moyen de premiers moyens d'ajustement par encliquetage (22) sur le couvercle de montant A (17) et de seconds moyens d'ajustement par encliquetage (23) sur le support de montant A (18) coopérant avec les premiers moyens d'ajustement par encliquetage.

9. Véhicule à moteur selon l'une quelconque des revendications 4 à 8, dans lequel le couvercle de montant A comprend un joint d'étanchéité d'attaque (17A) et un joint d'étanchéité de fuite (17B), le joint d'étanchéité de fuite venant en prise avec un côté intérieur du bord d'attaque de la porte respective, le joint d'étanchéité d'attaque venant en prise avec un côté extérieur du bord arrière de la partie latérale de pare-brise rectiligne respective.

10. Véhicule à moteur selon la revendication 9, dans lequel une partie supérieure du joint d'étanchéité d'attaque et une partie supérieure du joint d'étanchéité de fuite sont reliées l'une à l'autre par un joint d'étanchéité supérieur (17C), le joint d'étanchéité supérieur venant en prise avec un toit de la cabine de conducteur.

11. Véhicule à moteur selon la revendication 9 ou 10, dans lequel le couvercle de montant A (17) comprend un corps principal de montant A (17D) et le joint d'étanchéité d'attaque (17A) et le joint d'étanchéité de fuite (17B), le corps principal de montant A et les joints d'étanchéité étant formés par un procédé 2K.

12. Véhicule à moteur selon l'une quelconque des revendications 4 à 11, dans lequel le support de montant A comprend des nervures (24) s'étendant dans une direction verticale, les nervures étant prévues sur un côté du support de montant A dirigé vers la porte respective, les nervures venant en prise avec le joint d'étanchéité de fuite du couvercle de montant A.
